# EUROPEAN PATENT SPECIFICATION

(11) **EP 2 575 112 B1**
(45) Date of publication and mention of the grant of the patent: **01.02.2017**
(21) Application number: 12157203.6
(22) Date of filing: 28.02.2012
(51) Int. Cl.: G08B 13/24, G06K 19/07

(54) **Inventory and anti-theft alarm system**
Bestandsaufnahme- und Antidiebstahlalarmsystem
Système d'alarme d'inventaire et antivol

(30) Priority: 30.09.2011 US 201113200778
(43) Date of publication of application: 03.04.2013
(73) Proprietor: Joseph, Joseph, Jamaica, NY 11432 (US)
(72) Inventor: Joseph, Joseph, Jamaica, NY 11432 (US)
(74) Representative: Studio Torta S.p.A.

(56) References cited:
- US-A1- 2003 052 788
- US-A1- 2009 212 920
- US-A1- 2010 019 905

## Description

The present invention relates to an inventory and anti-theft alarm system. In particular the present invention relates to an inventory and/or anti-theft alarm system that utilizes an RFID tag for providing an inventory and/or anti-theft control in either real time or at the time of a scan. The alarm tag includes an encoded unique RFID inlay and a RF transmitter and circuit that is applied to the merchandise to be inventoried. The unique RFID inlay is encoded with a unique "serial number" that is indigenous to a particular tag. As such, the particular encoded number is unique to any one particular tag and in this way the present invention can track each particular tag to its location in a premise.

A major problem in any inventory stocking environment is theft. The present invention provides a system and a method to avoid such theft using an inventory and anti-theft alarm system employing an RFID tag for maintaining an ongoing log or record of the number of times an RFID tag and transmitter has been locked e.g. applied to, or unlocked e.g. removed from an item of merchandise, and keeps track of the unique numbered sequence for that event. For example, if a tag is reused after the sale of merchandise, it would have an "add the tag", "sel the item", "remove the tag" and "apply to a new tag" status.

The number of logical sequences not being correct, indicates that something is amiss and that the tag may have been removed by a thief who stole the item after the last time that particular tag was applied. Otherwise the tag should be flagged for investigation by the store manager. Therefore it would be desirable to provide a method and system that can overcome these problems, and provide an alert so that if the tag was not opened or closed the appropriate number of times a possible theft or tampering of the tag took place. Current RFID technology does not provide 100% inventory control. In current RFID technology, if an RFID tag is attached to, and subsequently removed from an item of merchandise, but the RFID TAG is not removed from the premises or the original location of where the item of merchandise was located, an inventory scan, typically done with an RFID handheld device or an antenna array, would fail to detect the item of merchandise as being missing from the premises as it would still locate the tag. This would lead to the false conclusion that the item of merchandise associated with the tag is still on the premises since the tag is still detected as being present on the premises.

U.S. Patent No. 5.539,394 relates to a method of communicating between a central location and a plurality of identification tags or labels. However this is accomplished without separately passing each tag or labeled product through a reading station via radio communication by using a combination of broadcast and time division multiplex architectures.

U.S. patent No. 5,963,144 discloses a cloaking circuit for assisting in reading operations of RFID transponders. The antenna of the RFID tag or label is disconnected from the balance of the RFID chip by a switch activated in response to a logic command generated by the RFID chip.

US Patent Application US2003/0052788 discloses a tracking and anti-theft alarm tag system in a medical environment.

The present invention provides for an inventory and anti-theft alarm tag system according to claim 1 and a method according to claim 10. The system can monitor the opening or closing of an alarm tag equipped with an RF chip and an RFID inlay to provide a unique rolling sequence event for tracking and analyzing the event relative to previous or subsequent unique event sequences. This is done to determine if the event is appropriate and in proper sequence. In particular, each alarm tag of the present invention includes an encoded unique RFID inlay that has a unique number assigned to each tag and has the ability to locate the tag in the premises such as but not limited to a store, warehouse or container. The alarm tag also includes an RF transmitter and circuit or a "counting/cut chip" that keeps track of the sequential event sequence number every time the locking pin is locked (circuit closed) or unlocked or the cable is cut (circuit is open) e.g. increases the count by one. The "counting/cut" chip and the RFID inlay share the same tag. There is a systematic association between the "counting/cut" chip and the unique encoded RFID inlay number so that they interact only with each other to permit the writing of data or the reading of data relative to the locking or unlocking or cut cable transactions at the tag. These are events which might happen between the chip and its associated RFID inlay. In the event of an inappropriately sequenced event, the unique sequence event will be referred to a manager for potential theft investigation. The present invention employs RFID technology to provide a logical real time status concerning the locking and unlocking of the tag associated with the item of merchandise the tag is attached to via the opening and/or closing of the on-board circuit. It will also identify whether the tagged item is or is not present on the premises and the identifying location of the merchandise. This is all done with the use of RFID technology.

### BRIEF DESCRIPTION OF THE DRAWING

FIG.1A is a top view or the RFID Tag of the present invention;
FIG. 1B is a side view of the RFID Tag of the present invention;
FIG. 1C is a bottom view of the RFID Tag of the present invention;
FIG. 2 is a flow chart illustrating the system of the present invention;
FIG. 3 is illustration of the present invention;
FIG. 4 is illustration of a master inventory database of the present invention;
FIG. 5 is illustration of a master inventory tag history database of the present invention;

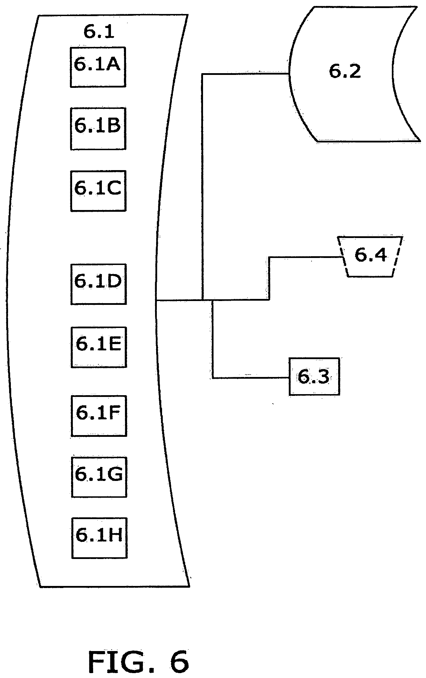

FIG. 6 is illustration of a master inventory tag history database of the present invention;

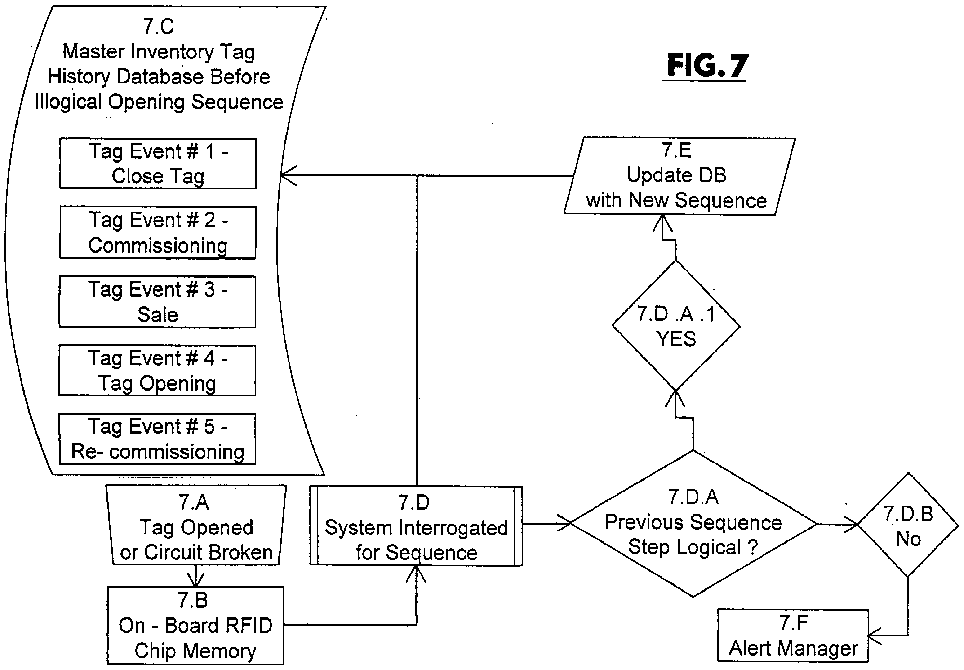

FIG. 7 is a flow chart illustrating an embodiment of the present invention; and

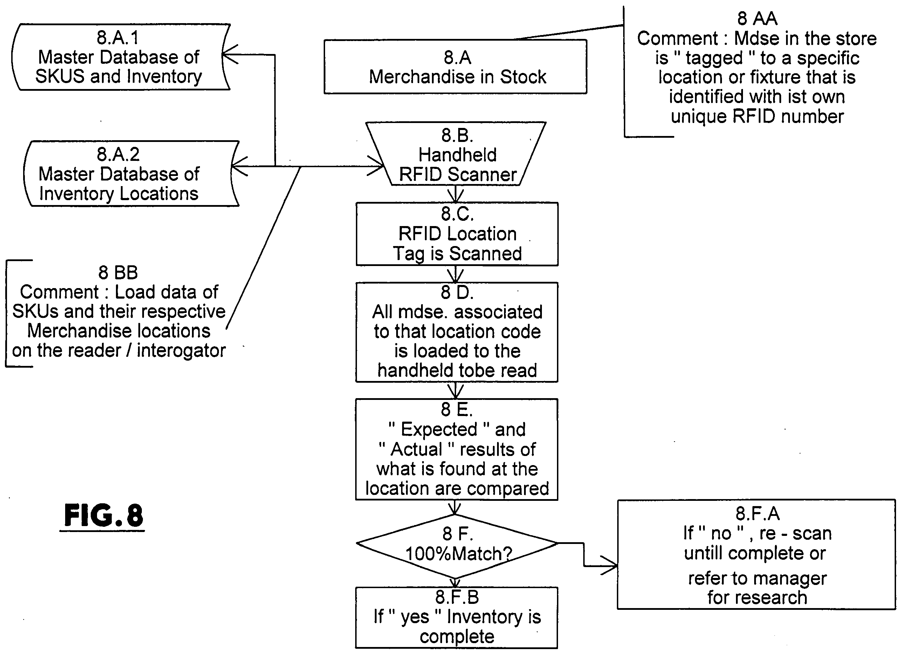

FIG. 8 is a flow chart illustrating an embodiment of the present invention.

### DETAILED DESCRIPTION OF THE PREFERRED EMBODIMENT(S)

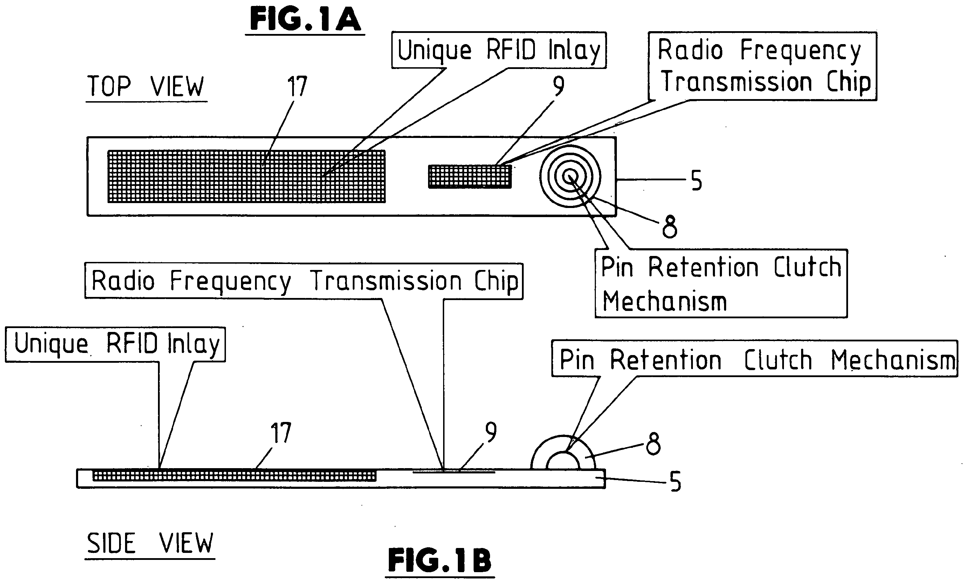

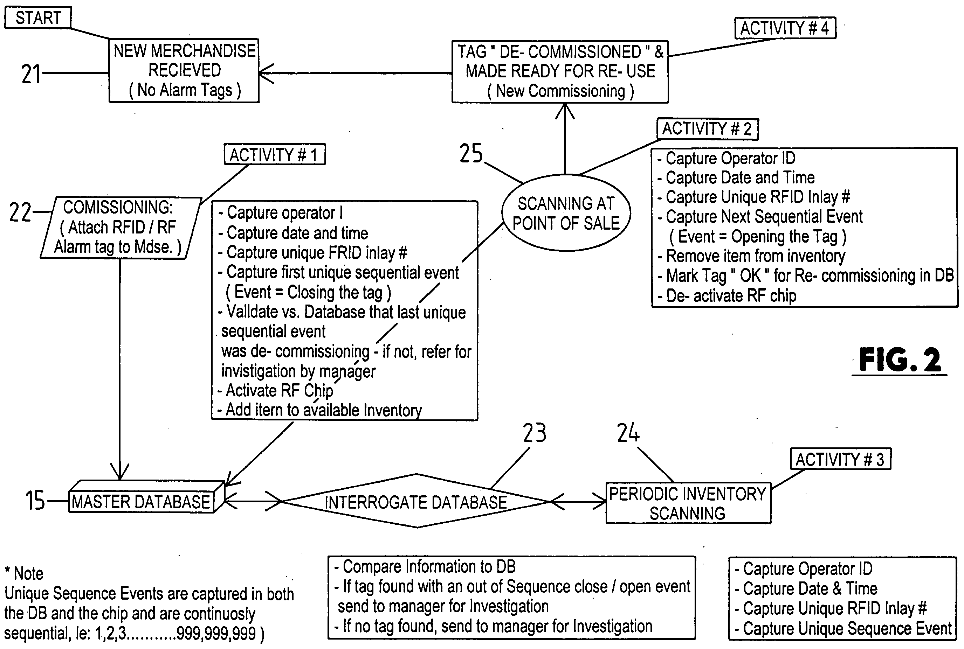

FIGS. 1A-C and 2 illustrate a RFID tag system for the present invention as it is applied to an item of merchandise. The present invention provides for a system that provides an inventory and/or anti-theft alarm tag or label utilizing RFID technology. As each item is presented as inventory in the system it can be tagged or labeled with RFID technology and placed in a master database. If the item is selected for purchase by a customer then it is scanned at point of sale and the RFID tag or label is deactivated and can be used again for another item of merchandise.

The master database 15 may also be interrogated by the system. The master database 15 (FIG.2) contains pertinent information which is systematically matched to or related by information to the RFID tag 5. The master database 15 may contain, by way of non-limiting illustrative example, information such as SKU, color, style, size, cost, retail price, quantities, etc. of each item of merchandise. As noted previously each item of merchandise will have its own unique RFID tag 5. The RFID tag 5 information includes a unique serial number which can include, but is not limited to, product keys such as for a class or department code to identify the associated item the tag 5. The master database 15 can index through the unique RFID items and their corresponding SKUs and/or other relevant information providing a valuable tool for identifying and locating the item being sought. In addition this information permits the present invention to effectively track the sequence number for each lock/unlock/cut cable/commissioning /scan activity as described bellow in detail.

FIGS. 1A-C illustrate how the RFID tag 5 may be attached to an item of merchandise such as but not limited to a garment item or a pair of shoes. In a preferred embodiment of the present invention, as shown in FIG. 1A-C, an RFID tag 5 is equipped with a locking pin 6 and or a cable/clutch assembly 8 and an on-board RF transmitter 9 and circuit or "counting/cut" chip incorporated in the RFID inlay 17. This "counting/cut" chip keeps track of a sequential event sequence number that increases by "1" every time the locking pin 6 is locked or unlocked or in the event the cable is cut. Further, every time the event sequence number changes, caused by a locking or unlocking event or a cut cable, the on-board counting/cut chip would transmit the new sequence number to the RFID inlay 17 in the same tag 5 and/or to a receiver in the location.

The insertion of the pin 6 or cable into the clutch mechanism in effect closes the loop in the circuit. If the pin is removed, or the cable is cut, the circuit is broken and the breaking of the circuit triggers a unique sequence event to the counting/cut chip.

The software used by the invention is proprietary in design and as such we are providing an overview. The insertion of a pin 6 or lanyard into the clutch mechanism causes a transmission of a closed status for that particular RFID Tag 5 and its on-board circuitry 17. This information as well as date, time, operator, etc are stored in the memory of the RF chip on the tag as well as in the master database and as such the "counting/closing" begins. Upon the pin being released from the clutch and/or the cable being cut, the circuit is broken triggering an "open" transaction that is captured by the database and stored. The software tracks status of the tag and updates status, for example, if: the tag is open and the circuit is open, the tag is closed by operator onto the garment, the tag is closed and circuit is closed, the data of the tag is passed electronically to a database and/or when the tag closes a Status Reported to Master Database and a Unique Sequence Event Recorded.

The tag 5 has an RFID inlay 17 and a pin 6 that is inserted into an opening 7 and locked in place by a clutch mechanism 8 to affix the tag 5 to the item of merchandise as shown in FIGS. 1A-C. The pin 5 and clutch mechanism 8 can be unlocked and relocked at point of sale. When the pin 5 is inserted into the clutch 8 at the time of RFID commissioning it completes a circuit for notifying the on-board smart or counting/cut chip that the tag is locked and records the time and date of each subsequent lock/unlock event. It also records a sequence of these events. This information is provided to the master database 15 using the unique RFID encoded item number. The encoded item number which can be encoded in the inlay 17 that the item is locked and in inventory as well as the lock/unlock sequence number.

The process of "commissioning" is the process wherein the SKU, item number or UPC number of the item is "married" with the unique RFID number contained in the tag. This is accomplished by first obtaining a standard BAR code read of the item's SKU and then associating that number with the unique RFID number in the SQL master database. Alternatively, if the SKU number is already known, the software can marry that number with the unique RFID number. This can be done on a conveyor system or one-by-one using a standard BAR code scanner and an RFID reader/writer. The associated pairing of the BAR code SKU and RFID tag number can be accessed by using either number as the index key within the system.

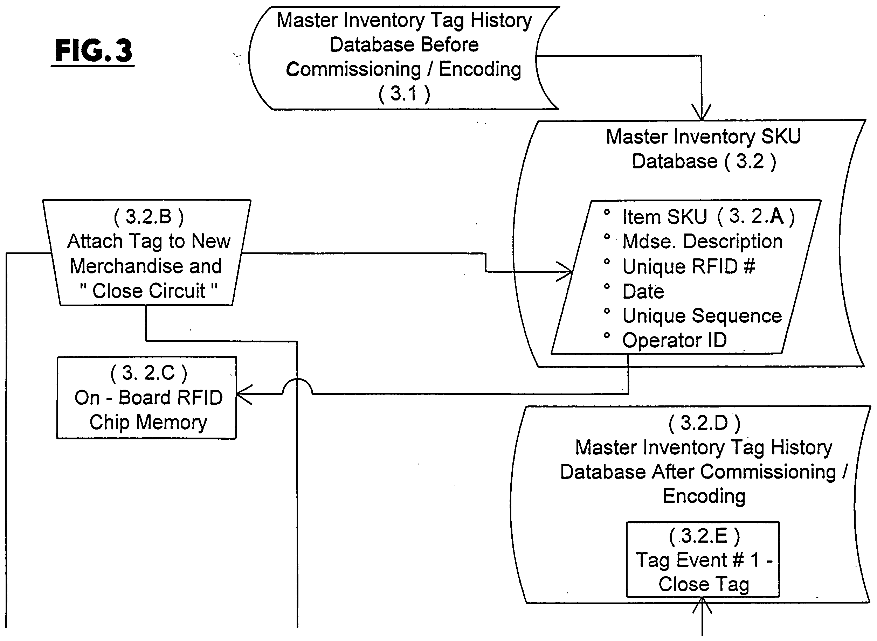

Figure 3 shows a block diagram for the system. The Master Inventory Tag History Database before encoding of a new tag has no information on a tag until it is encoded (3.1.). The Master Inventory SKU Database contains information on every item that has been encoded (3.2) including, but not limited to: Item SKU, Merchandise Description, Unique RFID Tag Number, Date of Activity, Unique Sequence Number, and Operator ID (3.2.A). The RFID tag is attached to the new merchandise and "Close Circuit" status is sent to the Master Inventory Tag History Database (3.2.B). Figure 3.2.D shows "Tag event #1-Closing of Tag" evidenced by 3.2.E and the association of that tag information is loaded to the Master Inventory SKU Database 3.2. Figure 3.2.C shows the on-board memory chip of the RFID tag is now in-synch with the Master Inventory SKU Database. Figure 3.2.D shows that after encoding, the Master Inventory Tag History Database now contains the unique event of the tag; the closing of the tag 3.2.E

The counting/cut chip and the RFID inlay that share the same tag 5 are "partnered" with each other creating a systemic association linking the counting/cut chip ID with the unique RFID inlay's number for that particular tag 5. This is done so that they only interact with each other. In this way writing of data or reading of data relative to lock/unlock or cut cable transactions at the tag level can only happen between the corresponding, partnered chip and RFID inlay for that particular tag 5.

The counting/cut chip includes: an onboard memory; either an onboard power supply preferably either a battery or solar cell for powering a circuit. The counting/cut chip counts locking/unlocking or cut cable sequences; transmits information directly to the master database 15, a receiver or a handheld if the circuit is broken via the cable being cut or the pin being locked or unlocked. It can also transmit information directly to the memory of its paired RFID inlay if the circuit is broken via the cable being cut or the pin being locked or unlocked.

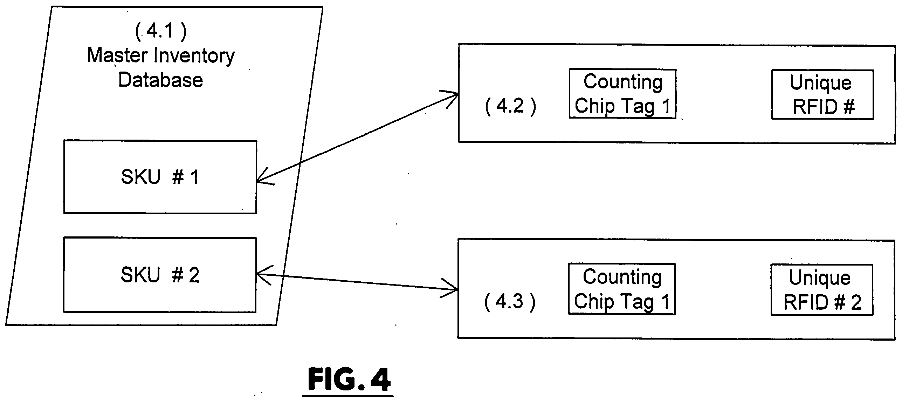

As shown in figure 4, the Master Inventory Database contains information on all SKUs and UPCs and has a direct 1:1 unique relationship with each article of merchandise identified with a unique RFID tag illustrated in 4.2 and 4.3. Each RFID tag contains a unique RFID and unique counting chip that only communicates with each other and has a unique 1:1 relationship with a particular item of clothing. The association of that tag and the item of clothing is exclusive. This means that no other tag can be associated that article of clothing in the database (4.1).

The tag 5 can be one of the following: (a) the tag incorporates a separate counting/cut chip for writing to the enclosed RFID chip and/or (b) the tag is the RFID hybrid wherein the change in status of the tag (locked or unlocked) is written directly into the memory portion of the embedded RFID chip thus eliminating the need of an additional counting/cut chip. This encoding or commissioning is accomplished by taking user defined data and electronically writing it into the embedded memory of the RFID chip, using either an RFID antenna or other devices such as but not limited to an array of antennas, a handheld RFID scanner device, a RFID capable printer or any other RFID writeable device c. the tag is a radio frequency/RF chip 9 for transmitting data directly to a continuously scanning receiver for providing information to the inventory management system. This is done when the chip is energized by a receiver or changes in status.

The RFID tag 5 communicates via an RF transmitter 9 to a master database 15 (See FIG. 2). The master date base 15 stores and can compare the information from the RFID tag 5 with the history of that particular RFID tag 5 to check the number of times the tag 5 has been locked and unlocked. It also compares the data on the tag 5 with the data in the master database 15.

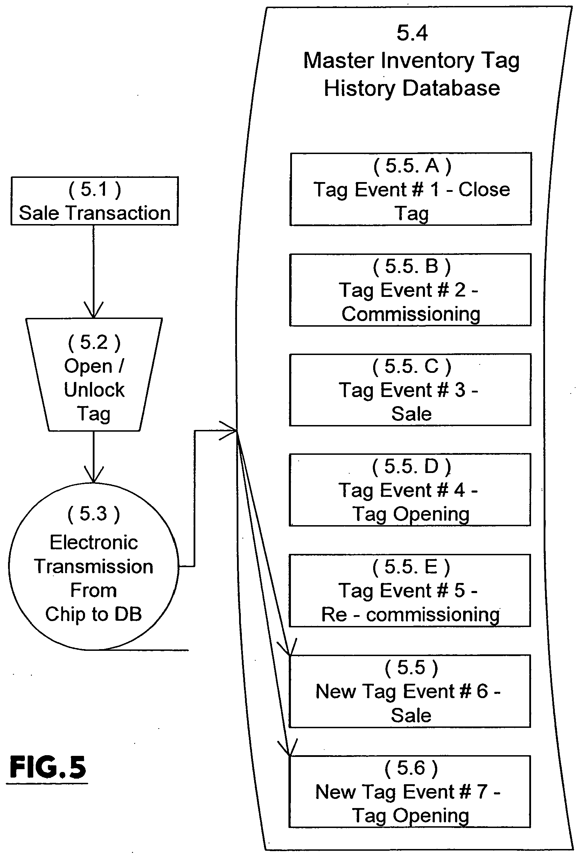

As shown in Figure 5, a sale transaction (5.1) allows the operator to unlock the RFID enabled tag (5.2) which creates an electronic transmission (5.3) to the Master Inventory Tag History Database (5.4) that updates the history for that tag with the event of the sale (5.5) and the opening of the tag (5.6) that are added to the existing sequences of past unique events for this tag: For examples, Tag Event #1-the first closing of the tag, Tag Event #2-the commissioning of the tag, Tag Event #3 -the sale of the merchandise associated with the tag, Tag Event #4-the opening of a tag after the sale, Tag Event #5- the re-commissioning of the tag on a new piece of merchandise.

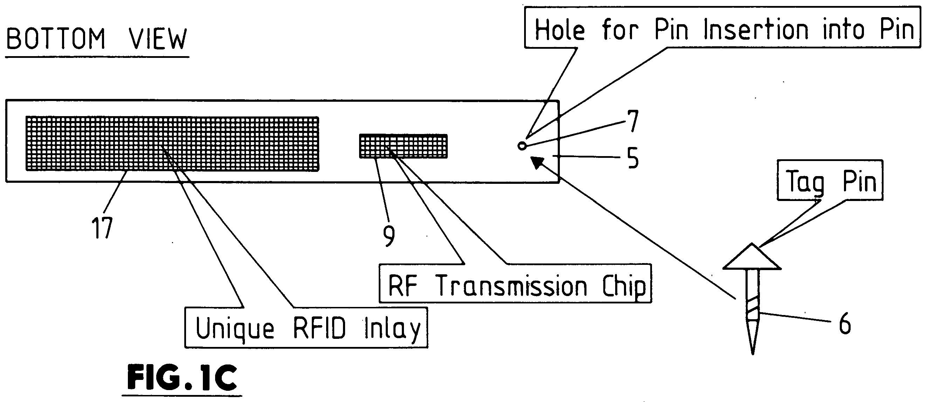

Each time an item of merchandise is sold the tag 5 is retired for that item and then the tag 5 is recommissioned for a new item of merchandise. In this way the tag 5 is opened to remove it from the sold item and closed for the new item which the tag is now affixed to so that the master data base 15 has a history of this removal and reuse (replacement) for merchandise items in association with that particular tag 5 . This POS -point of sale-transaction, accomplished by RFID scan, systematically transmits this data and information to the master database 15. As seen in FIGS. 1A, 1 B and 1 C each RFID tag 5 has its own unique RFID inlay 7 and either a counting/cut chip or else the change in status of the tag 5 (e.g. locked or unlocked) is written directly into the memory of the embedded RFID chip and no additional counting/cut chip is required.

In the example, prior to a re-commissioning event, the Master Inventory Tag History Database (6.1) contains 7 events relative to a specific RFID tag: Tag Event #1: initial close of the tag, Tag Event #2: initial commissioning of the tag to a piece of merchandise, Tag Event #3: a sale transaction, Tag Event #4: The opening of the tag after the sale to remove from the merchandise, Tag Event #5: The re-commissioning of the tag to a new piece of merchandise, Tag Event #6: The subsequent sale of that merchandise and Tag Event #7: The opening of the tag after the sale.

This information is maintained in the Master Inventory Tag History Database (6.1) as well as the Master Inventory SKU database (6.2) as well as in the resident memory of the RFID tag (6.3). In the example, when the tag is attached to a new piece of merchandise, (6.4) the Master Inventory Tag History Database (6.1) and the Master Inventory SKU database (6.2) as well as in the resident memory of the RFID tag (6.3) are updated with a new unique event (6.1.H) that represents the tag closing and the re-commissioning of that tag onto a new piece of merchandise.

As seen in FIG.2 the system of the present invention operates as follows: The system 20 receives a new item of merchandise (step 21). The RFID Tag 5 is attached or affixed to this merchandise (step 22). During this step the tag is commissioned (meaning that it is attached or affixed as described in FIGS 1A-C and it is paired with the RFID number and SKU as well as an operator ID is captured by the system). The date and time is recorded for that merchandise item when the tag is affixed. The RF inlay is recorded by a systemic transaction which updates the master database 15 such as, by way of non-limiting example, a scan of the RFID chip by an RFID reader scan; the first sequential event is recorded - e.g. the locking of the tag 5 on this item of merchandise; a validation is performed by the master database 15: that the last unique event was a decommissioning of the tag (and if not it is referred to the manager for investigation). The chip is then activated and the item is added to the inventory in the master database 15 marking the item as commissioned. If a POS sales transaction associated with the unique RFID chip makes logical equable sense in terms of the locking/unlocking/cut data then no alert is sent to a store manager for investigation. One such logical sequential sequence would be a prior commissioning event, followed by a sales transaction event, followed by a recommissioning event, tied to a new item of merchandise. If there was a non logical sequence, then the item would be referred to the manager to investigate. The physical chip may or may not remain active at all times and available for scanning. The new item is added to the inventory in the master database 15 and is available in inventory.

This illustrates the sequence of events when a tag is opened, or the circuit is broken on a tag. When the system recognizes that a tag is open, (7.A), the on-board RFID chip (7.B) captures the event and reports that back to the Master Inventory Tag History Database (7.C) where the logical sequence of the event is checked versus prior events (7.D), If the sequence is logical (7.D.A) & (7.D.A.1) then the Master Inventory Tag History Database (7.C) is updated with the next sequence event (7.E). If the event is not logical (7.D.A) & (7.D.B), an alert is sent to the Manager (7.F) for further interrogation and review.

The data base 15 is systematically interrogated (step 23) and compares information from the tag 5 for the new merchandise item 21 with the master database 15. If the tag is determined to be an out of sequence event e.g. the number of opens and closes do not make logical sequential sense, then the item is flagged within the database and the item will require a further security investigation. This further investigation status for the item is displayed in the master database 15 and can be sent as a report, an email message or an automated cell phone call or text message to the manager to investigate the status of this item. Also if no tag is found a signal is sent to the manager to investigate by the same aforementioned means. The system is capable of periodic scanning as defined by the user using antenna arrays or hand held RFID scanners or any other suitable devices.

Software for inventory tracking is resident on the RFID handheld, computer, or other device used for inventory. Each display location has a unique RFID location. In the master database, items of inventory are associated 1:1 to that display location. A daily or ad-hoc download of those relationships are loaded into the handheld reader and or other RFID reading device. The scanning operation requires the operator to scan the RFID location tag and then "search" for each of the associated items of inventory. Software within the RFID reader provides either an audio or visual display of items expected to be in that location or as the scan progresses and items are identified, they are dropped off the list viewable on the screen. When all items have been found, the operator is advised as such. Items not found are referred to a manager for investigation.

To take inventory of merchandise stock (8.A), subsets of the inventory Master Database of SKUs & Inventory stock (8.A.1) and the Master Database of Inventory Locations (8.A.2) are loaded onto a Handheld RFID Scanner, Computer with Antenna array, etc. (8.B). A location is selected from the Location database and the scanner reads the location code (8AA) for that location (8.C). The merchandise associated with that location code is loaded to the mobile device to be read (8.D) and reading begins (8.E) and compares "expected" results with "actual" results found. If there is a 100% match (8.F), inventory is complete (8.F.B). If there is not a 100% match in step (8.F), the differences between "actual" and "expected" results (8.F.A) are flagged or sent to the manager for research.

(Step 24). Such periodic scanning could be continuous and ongoing, include daily inventory, weekly inventory, monthly inventory, semi-annual inventory or an annual inventory period. This periodic scanning will capture all the user defined fields on the master database 15 and in the RFID chip as is required to complete all scanning that is required. At a point of sale transaction an RFID scan captures and updates the master database 15 with the user defined unique employee operator ID of the employee performing the transaction, the date and time of the transaction, the unique RFID inlay number of the item of merchandise associated with that transaction. The next sequential event e.g. is the unlock sequence number.

The captured transaction also removes the tag 5 from inventory in the master database 15 and identifies the tag 5 in the master database 15 as being available for recommissioning. This is accomplished by updating the individual record for that RFID tag 5 as being "sold" and available for recommissioning or reuse, and thus permitting the unique number of the RFID tag 5 to become associated with another item of merchandise in the master database 15 (step 21). Thus the present invention provides for an inventory and antitheft alarm tag utilizing RFID technology providing for either real time or time of scan inventory and theft control while monitoring the time and date of each locking/unlocking event and the sequence of these events.

While presently preferred embodiments have been described for purposes of the disclosure, numerous changes in the arrangement can be made by those skilled in the art. Such changes are encompassed within the spirit of the invention as defined by the appended claims.

## Claims

1. An inventory and anti-theft alarm tag system, comprising:
an RFID tag (5) including an RFID transmitter (9) and a unique RFID inlay (17) having a unique RFID item number encoded therein; and
a master database (15) for communication between said RFID tag (5) and said master database (15) via said RF transmitter (9),
wherein the RFID tag includes a pin (6) which is inserted into an opening of said RFID tag (5) and is locked in place by a clutch mechanism (8) for affixing the RFID tag (5) to a merchandise item, wherein the pin (6) and the clutch mechanism (8) can be unlocked and relocked at point of sale by removing or inserting the pin (6) into the clutch mechanism (8) thereby breaking or completing a circuit, the insertion of the pin (6) thus notifying the RFID tag (5) and the master database (15) that
the RFID tag (5) is locked and recording a time and date when each lock/unlock event begins; and
wherein said master database (15) compares information from said RFID tag (5) with that stored in said master database (15) to determine if the RFID tag (5) is authentic and has been opened or closed a defined number of times indicated in the master database (15), and if the number of opens and closes do not make logical sequential sense, this status is displayed in the master data base and a message is sent to a manager for further investigation.

2. The system according to claim 1 wherein a change in a status of the tag being either open or closed is directly written into a memory of the RFID tag (5) and transmitted to and recorded in the master database (15).

3. The system according to claim 1 wherein said first sequential event is an attachment of the RFID to the merchandise item by inserting the tag pin (6) into the opening of the RFID tag (5), thereby closing the RFID tag (5).

4. The system according to claim 1 wherein, at a point of sale, the master database (15) is interrogated and compares information from the RFID tag (5) with the master database (15) and if the number of openings and closings recorded on the RFID tag (5) is determined to be out of sequence with the number of openings and closings recorded on the master database (15), a signal is sent to the manager to investigate.

5. The system according to claim 4 wherein, if no tag is found, a signal is sent to the manager for investigation.

6. The system according to claim 1 wherein the RFID tag (5) includes a smart chip.

7. The system according to claim 1 wherein said system is capable of periodic scanning the RFID tag (5) to capture an operator ID, the date and time, a unique RFID inlay (17) and sequence events for the RFID tag (5).

8. The system according to claim 1 wherein said system, at a point of sale, scans and captures the operator ID, the date and time, the unique RFID inlay (17) number and a next sequential event, removes the RFID tag (5) from inventory and marks the RFID tag (5) for recommissioning, wherein recommissioning is attaching the RFID tag (5) to a next merchandise item.

9. The system according to claim 1 wherein the information is provided to the master database (15) using the unique RFID encoded item number showing that the merchandise item is locked and in inventory, and includes a lock/unlock sequence number.

10. An inventory and anti-theft alarm tag method, the steps comprising:
affixing an RFID tag (5) to an item of merchandise, said RFID tag (5) adapted to communicate with a master database (15) via an RF transmitter (9) in said RFID tag (5);
providing said RFID tag (5) with a unique RFID inlay (17) having a unique RFID item number encoded therein, the RFID tag (5) including a pin (6) which is inserted into an opening of said RFID tag (5) and is locked in place by a clutch mechanism (8) for affixing the at least one RFID tag (5) to a merchandise item, wherein the pin (6) and the clutch mechanism (8) can be unlocked and relocked at point of sale by removing or inserting the pin (6) into the clutch mechanism (8) thereby breaking or completing a circuit; and
communicating between said RFID tag (5) and said master database (15) via said RFID transmitter (9),
wherein the insertion of the pin (6) is notifying the RFID tag (5) and the master database (15) that the RFID tag (5) is locked and recording a time and date when each lock/unlock event begins and
wherein said master database (15) compares information from said RFID tag (5) with that stored in said master database to (15) determine if said RFID tag (5) is authentic and has been opened or closed a defined number of times indicated in the master database (15), and if the number of opens and closes do not make logical sequential sense, this status is displayed in the master data base and a message is sent to a store manager for further investigation.

11. The method according to claim 10, wherein, said RFID tag (5) is attached to a merchandise item, an operator ID is captured by the system, a date and time, the RFID inlay (17) and a first sequential event is recorded; and the RFID tag (5) is activated and the merchandise item is added to an inventory in the master database (15).

## Patentansprüche

1. Bestandsaufnahme- und Anti-Diebstahlalarm-Etikettensystem, mit:
einem RFID-Etikett (5) mit einem RFID-Sender (9) und einem spezifischen RFID-Inlay (17) mit einer darin codierten spezifischen RFID-Artikelnummer; und
einer Master-Datenbank (15) zur Kommunikation zwischen dem RFID-Etikett (5) und der Master-Datenbank (15) über den RFID-Sender (9),
wobei das RFID-Etikett einen Stift (6) aufweist, der in eine Öffnung des RFID-Etiketts (5) eingesetzt und durch einen Kupplungsmechanismus (8) in Position verriegelt wird, um das RFID-Etikett (5) an einem Warenartikel zu befestigen, wobei der Stift (6) und der Kupplungsmechanismus (8) an einer Verkaufsstelle entriegelt und erneut verriegelt werden können, indem der Stift (6) vom Kupplungsmechanismus (8) entfernt oder in den Kupplungsmechanismus eingesetzt wird, wodurch ein Schaltkreis unterbrochen oder geschlossen wird, wobei durch das Einsetzen des Stifts (6) das RFID-Etikett (5) und die Master-Datenbank (15) darüber informiert werden, dass das RFID-Etikett verriegelt ist, und eine Zeit und ein Datum des Beginns jedes Verriegelungs-/Entriegelungsereignisses gespeichert werden, und
wobei die Master-Datenbank (15) Information vom RFID-Etikett (5) mit in der Master-Datenbank (15) gespeicherter Information vergleicht, um zu bestimmen, ob das RFID-Etikett (5) echt ist und für eine in der Master-Datenbank (15) angezeigte definierte Anzahl von Malen geöffnet oder geschlossen worden ist, wobei, wenn die Anzahl der Öffnungs- und Schließvorgänge keinen logischen sequenziellen Sinn ergibt, dieser Status in der Master-Datenbank angezeigt wird und eine Meldung für weitere Untersuchungen an einen Manager übertragen wird.

2. System nach Anspruch 1, wobei eine Änderung eines Status des Etiketts, das entweder offen oder geschlossen ist, direkt in einen Speicher des RFID-Etiketts (5) geschrieben und an die Master-Datenbank (15) übertragen und darin gespeichert wird.

3. System nach Anspruch 1, wobei das erste sequenzielle Ereignis ein Befestigen des RFID am Warenartikel durch Einsetzen des Etikettstifts (6) in die Öffnung des RFID-Etiketts (5) ist, um das RFID-Etikett (5) zu schließen.

4. System nach Anspruch 1, wobei an einer Verkaufsstelle die Master-Datenbank (15) abgefragt wird und Information vom RFID-Etikett (5) mit Information in der Master-Datenbank (15) verglichen wird, und wobei, wenn bestimmt wird, dass die auf dem RFID-Etikett gespeicherte Anzahl von Öffnungs- und Schließvorgängen nicht mit der Sequenz der in der Master-Datenbank (15) gespeicherten Anzahl von Öffnungs- und Schließvorgängen übereinstimmt, ein Signal für weitere Untersuchungen an den Manager übertragen wird.

5. System nach Anspruch 4, wobei, wenn kein Etikett gefunden wird, ein Signal für weitere Untersuchungen an den Manager übertragen wird.

6. System nach Anspruch 1, wobei das RFID-Etikett (5) einen Smart-Chip aufweist.

7. System nach Anspruch 1, wobei das System dazu geeignet ist, das RFID-Etikett (5) periodisch zu scannen, um eine Operator ID, das Datum und die Uhrzeit, ein spezifisches RFID-Inlay (17) und Sequenzereignisse für das RFID-Etikett (5) zu erfassen.

8. System nach Anspruch 1, wobei das System an einer Verkaufsstelle die Operator ID, das Datum und die Uhrzeit, die Nummer des spezifischen RFID-Inlays (17) und ein nächstes sequenzielles Ereignis scannt und erfasst, das RFID-Etikett (5) vom Inventar entfernt und das RFID-Etikett (5) für eine Wiederinbetriebnahme markiert, wobei die Wiederinbetriebnahme das Befestigen des RFID-Etiketts (5) an einem nächsten Warenartikel ist.

9. System nach Anspruch 1, wobei der Master-Datenbank (15) die Information unter Verwendung der codierten spezifischen RFID-Artikelnummer zugeführt wird, die darstellt, dass der Warenartikel verriegelt und in den Bestand aufgenommen ist, und eine Verriegelungs-/Entriegelungs-Sequenznummer aufweist.

10. Bestandsaufnahme- und Anti-Diebstahlalarm-Etikettierverfahren mit den Schritten:
Befestigen eines RFID-Etiketts (5) an einem Warenartikel, wobei das RFID-Etikett (5) dazu geeignet ist, über einen im RFID-Etikett (5) vorgesehenen HF-Sender (9) mit einer Master-Datenbank (15) zu kommunizieren;
Bereitstellen des RFID-Etiketts (5) mit einem spezifischen RFID-Inlay (17), in dem eine spezifische RFID-Artikelnummer codiert ist, wobei das RFID-Etikett (5) einen Stift (6) aufweist, der in eine Öffnung des RFID-Etiketts (5) eingesetzt und durch einen Kupplungsmechanismus (8) in Position verriegelt wird, um das mindestens eine RFID-Etikett (5) an einem Warenartikel zu befestigen, wobei der Stift (6) und der Kupplungsmechanismus (8) an einer Verkaufsstelle entriegelt und erneut verriegelt werden können, indem der Stift (6) vom Kupplungsmechanismus (8) entfernt oder in den Kupplungsmechanismus (8) eingesetzt wird, wodurch ein Schaltkreis unterbrochen oder geschlossen wird, und
Kommunizieren zwischen dem RFID-Etikett (5) und der Master-Datenbank (15) über den RFID-Sender (9),
wobei durch das Einsetzen des Stifts (6) das RFID-Etikett (5) und die Master-Datenbank (15) darüber informiert werden, dass das RFID-Etikett verriegelt ist, und eine Zeit und ein Datum des Beginns jedes Verriegelungs-/Entriegelungsereignisses aufgezeichnet werden, und
wobei die Master-Datenbank (15) Information vom RFID-Etikett (5) mit in der Master-Datenbank (15) gespeicherter Information vergleicht, um zu bestimmen, ob das RFID-Etikett (5) echt ist und für eine in der Master-Datenbank (15) angezeigte definierte Anzahl von Malen geöffnet oder geschlossen worden ist, wobei, wenn die Anzahl der Öffnungs- und Schließvorgänge keinen logischen sequenziellen Sinn ergibt, dieser Status in der Master-Datenbank angezeigt und eine Meldung für weitere Untersuchungen an einen Manager übertragen wird.

11. Verfahren nach Anspruch 10, wobei das RFID-Etikett (5) an einem Warenartikel befestigt wird, eine Operator ID durch das System erfasst wird, ein Datum und eine Uhrzeit, das RFID-Inlay (17) und ein erstes sequenzielles Ereignis gespeichert werden, und das RFID-Etikett (5) aktiviert wird und der Warenartikel einem Bestand in der Master-Datenbank (15) hinzugefügt wird.

## Revendications

1. Système d'étiquette d'alarme inventaire et antivol, comprenant :
une étiquette RFID (5) incluant un émetteur RF (9) et une unique incrustation RFID (17) présentant un numéro d'article RFID unique codé en son sein, et une base de données principale (15) pour une communication entre ladite étiquette RFID (5) et ladite base de données principale (15) par l'intermédiaire dudit émetteur RF (9),
dans lequel l'étiquette RFID inclut une broche (6) qui est insérée dans une ouverture de ladite étiquette RFID (5) et est verrouillée par un mécanisme d'enclenchement (8) pour fixer l'étiquette RFID (5) à un article marchand, dans lequel la broche (6) et le mécanisme d'enclenchement (8) peuvent être déverrouillés et verrouillés à nouveau en point de vente en supprimant ou en insérant la broche (6) dans le mécanisme d'enclenchement (8), ce qui permet par conséquent de rompre ou de terminer un circuit, l'insertion de la broche (6) indiquant ainsi à l'étiquette RFID (5) et à la base de données principale (15) que l'étiquette RFID (5) est verrouillée, et enregistrant une heure et une date du début de chaque événement de verrouillage/déverrouillage, et
dans lequel ladite base de données principale (15) compare des informations provenant de ladite étiquette RFID (5) à des informations stockées dans ladite base de données principale (15), en vue de déterminer si l'étiquette RFID (5) est authentique et si elle a été ouverte ou fermée un nombre de fois défini indiqué dans la base de données principale (15), et si le nombre d'ouvertures et de fermetures n'a pas de sens en termes de logique séquentielle, cet état est affiché dans la base de données principale et un message est envoyé à un responsable pour de plus amples investigations.

2. Système selon la revendication 1, **caractérisé en ce qu'**un changement d'état de l'étiquette, à savoir « ouverte » ou « fermée », est directement écrit dans une mémoire de l'étiquette RFID (5) et transmis à, et enregistré dans, la base de données principale (15).

3. Système selon la revendication 1, **caractérisé en ce que** ledit premier événement séquentiel est une fixation de l'étiquette RFID à l'article marchand, par l'insertion de la broche d'étiquette (6) dans l'ouverture de l'étiquette RFID (5), ce qui ferme par conséquent l'étiquette RFID (5).

4. Système selon la revendication 1, **caractérisé en ce que**, en point de vente, la base de données principale (15) est interrogée et elle compare des informations provenant de l'étiquette RFID (5) à la base de données principale (15), et si le nombre d'ouvertures et de fermetures enregistré sur l'étiquette RFID (5) est déterminé comme étant différent du nombre d'ouvertures et fermetures enregistré dans la base de données principale (15), un signal est envoyé au responsable à des fins d'investigations.

5. Système selon la revendication 4, **caractérisé en ce que**, si aucune étiquette n'est trouvée, un signal est envoyé au responsable à des fins d'investigations.

6. Système selon la revendication 1, **caractérisé en ce que** l'étiquette RFID (5) comprend une puce intelligente.

7. Système selon la revendication 1, **caractérisé en ce que** ledit système est en mesure d'exécuter un balayage périodique de l'étiquette RFID (5) pour capturer un identifiant d'opérateur, la date et l'heure, une unique incrustation RFID (17) et des événements de séquence pour l'étiquette RFID (5).

8. Système selon la revendication 1, **caractérisé en ce que** ledit système, en point de vente, balaie et capture l'identifiant d'opérateur, la date et l'heure, le numéro de l'unique incrustation RFID (17), et un événement séquentiel successif, et supprime l'étiquette RFID (5) de l'inventaire et marque l'étiquette RFID (5) pour une remise en service, dans lequel la remise en service consiste à fixer l'étiquette RFID (5) à un article marchand successif.

9. Système selon la revendication 1, **caractérisé en ce que** les informations sont fournies à la base de données principale (15) en utilisant un numéro d'article codé à étiquette RFID unique indiquant que l'article marchand est verrouillé et dans l'inventaire, et inclut un numéro de séquence de verrouillage/déverrouillage.

10. Procédé d'étiquette d'alarme inventaire et antivol, comprenant les étapes ci-dessous consistant à :
- fixer une étiquette RFID (5) à un article marchand, ladite étiquette RFID (5) étant apte à communiquer avec une base de données principale (15), par l'intermédiaire d'un émetteur RF (9) dans ladite étiquette RFID (5) ;
- fournir, à ladite étiquette RFID (5), une unique incrustation RFID (17) présentant un numéro d'article RFID unique codé en son sein, l'étiquette RFID (5) incluant une broche (6) qui est insérée dans une ouverture de ladite étiquette RFID (5) et est verrouillée par un mécanisme d'enclenchement (8) pour fixer ladite au moins une étiquette RFID (5) à un article marchand, dans lequel la broche (6) et le mécanisme d'enclenchement (8) peuvent être déverrouillés et verrouillés à nouveau en point de vente en supprimant ou en insérant la broche (6) dans le mécanisme d'enclenchement (8), ce qui permet par conséquent de rompre ou de terminer un circuit ;
- mettre en oeuvre une communication entre ladite étiquette RFID (5) et ladite base de données principale (15), par l'intermédiaire dudit émetteur RF (9),
dans lequel l'insertion de la broche (6) indique à l'étiquette RFID (5) et à la base de données principale (15) que l'étiquette RFID (5) est verrouillée, et enregistre une heure et une date du début de chaque événement de verrouillage/déverrouillage, et
dans lequel ladite base de données principale (15) compare des informations provenant de ladite étiquette RFID (5) à des informations stockées dans ladite base de données principale (15), en vue de déterminer si l'étiquette RFID (5) est authentique et si elle a été ouverte ou fermée un nombre de fois défini indiqué dans la base de données principale (15), et si le nombre d'ouvertures et de fermetures n'a pas de sens en termes de logique séquentielle, cet état est affiché dans la base de données principale et un message est envoyé à un responsable de magasin pour de plus amples investigations.

11. Procédé selon la revendication 10, **caractérisé en ce que** ladite étiquette RFID (5) est fixée à un article marchand, un identifiant d'opérateur est capturé par le système, une date et une heure, l'incrustation RFID (17) et un premier événement séquentiel sont enregistrés, l'étiquette RFID (5) est activée, et l'article marchand est ajouté à l'inventaire dans la base de données principale (15).
